# EUROPÄISCHE PATENTSCHRIFT

(11) **EP 3 837 289 B1**
(45) Veröffentlichungstag und Bekanntmachung des Hinweises auf die Patenterteilung: **16.03.2022**
(21) Anmeldenummer: 19748495.9
(22) Anmeldetag: 25.07.2019
(51) Int. Cl.: C08F 6/00

(54) **VERFAHREN ZUR HERSTELLUNG EINER WÄSSRIGEN POLYMERISATDISPERSION**
METHOD FOR PREPARING AN AQUEOUS POLYMER DISPERSION
PROCÉDÉ DE PRÉPARATION D'UNE DISPERSION AQUEUSE DE POLYMÈRE

(43) Veröffentlichungstag der Anmeldung: 23.06.2021
(73) Patentinhaber: Wacker Chemie AG, 81737 München (DE)
(72) Erfinder: BABAR, Muhammad, 84489 Burghausen (DE); ECKL, Bernhard, 84489 Burghausen (DE); FRAUENDORFER, Eric, 84489 Burghausen (DE)
(74) Vertreter: Ege, Markus
(86) Internationale Anmeldenummer: PCT/EP2019/070074
(87) Internationale Veröffentlichungsnummer: WO 2021/013354

(56) Entgegenhaltungen:
- EP-A1- 1 215 218
- DE-A1-102007 040 850
- US-A- 5 698 666

## Beschreibung

Die Erfindung betrifft ein Verfahren zur Herstellung einer wässrigen Polymerisatdispersion mittels radikalisch initiierter Emulsionspolymerisation von radikalisch polymerisierbaren ethylenisch ungesättigten Monomeren in einem Polymerisationsreaktor.

Wässrige Polymerdispersionen werden in vielfältigen Anwendungsgebieten als Bindemittel eingesetzt, beispielsweise in Klebstoffen, Coatinganwendungen, als Bindemittel in Teppich-, Textil- und Papieranwendungen sowie in bauchemischen Produkten wie beispielsweise Fliesenkleber, Putzen und Dichtungsmassen. Die Herstellung dieser wässrigen Dispersionen erfolgt üblicherweise durch wässrige Emulsionspolymerisation, entweder chargenweise (diskontinuierlich) in gerührten Polymerisationsreaktoren oder auch kontinuierlich in Rührkesselkaskaden. Die damit erhaltenen Polymerisatdispersionen (Polymerdispersionen) haben im Allgemeinen einen Feststoffgehalt von 40 bis 75 Gew.-% und enthalten wegen der unvollständig verlaufenden Polymerisation einen Anteil an nicht polymerisierten Monomeren (Restmonomere). Des weiteren haben die mittels der wässrigen Emulsionspolymerisation hergestellten wässrigen Polymerisatdispersionen häufig einen unerwünschten Anteil an Polymerisatkoagulaten. Solche Koagulate führen zur unerwünschten Stippenbildung in mit der Polymerisatdispersion erhaltenen Polymerfilmen und können zu Verstopfungen in nachgeordneten Prozessen führen.

Deshalb werden die wässrigen Polymerisatdispersionen nach der Polymerisation in einen Entgasungsbehälter, im Allgemeinen ein Rührkessel, überführt und dort mittels physikalischen und/oder chemischen Methoden behandelt. Bei der physikalischen Nachbehandlung werden flüchtige Bestandteile der Polymerisatdispersion im Allgemeinen mittels Durchleiten oder Überleiten von inerten Schleppgasen entfernt. Zur chemischen Nachbehandlung wird im Allgemeinen eine Nachpolymerisation in Gegenwart einer Redoxkombination aus Oxidationsinitiator und Reduktionsinitiator ausgeführt. Zur Sicherstellung der Produktqualität der Polymerisatdispersion werden während und nach der Nachbehandlung wichtige Produktparameter wie beispielsweise Viskosität, Festgehalt, Restmonomergehalt, VOC-Gehalt analysiert. Zur Entfernung von Polymerisatkoagulaten wird die Polymerisatdispersion üblicherweise bei der Verpumpung aus dem beschriebenen Prozessbehälter filtriert.

Bei der chargenweisen (diskontinuierlichen) Herstellung von wässrigen Polymerisatdispersionen in gerührten Polymerisationsreaktoren wird die Nachbehandlung der damit erhaltenen Polymerisatdispersion nach jeder Charge durchgeführt und die so behandelte Polymerisatdispersion anschließend in einem Lagerbehälter gelagert. Man ist dabei bestrebt die Zeit für die Nachbehandlung möglichst kurz zu halten, um die Zykluszeit, das heißt die Zeit für Polymerisation und Nachbehandlung und Analyse bei der Herstellung möglichst kurz zu halten.

In der WO 2015/168801 A1 ist ein externer Filterkreislauf zur Aufbereitung von Abwasser oder von Schlamm aus einem Bioreaktor beschrieben. Die US 2007/0023340 A1 beschreibt eine Vorrichtung zur tangentialen Filtration eines zu verarbeitenden Fluids, welche trotz geringer Größe einen guten Filtrationsfluß beibehält. Ein Filterkreislaufsystem zur Filtration von Pulverfarbe beschreibt die CN 103055583. Die JP 2010037487 beschreibt einen Filterkreislauf zur Reinigung von Vinylpolymer.

Es bestand die Aufgabe ein Verfahren zur Verfügung zu stellen mit welchem sich der zeitliche Aufwand für die Nachbehandlung und Analyse einer Polymerisatdispersion reduzieren lässt.

Gegenstand der Erfindung ist ein Verfahren zur Herstellung einer wässrigen Polymerisatdispersion mittels radikalisch initiierter Emulsionspolymerisation von radikalisch polymerisierbaren ethylenisch ungesättigten Monomeren in einem Polymerisationsreaktor, wobei die damit erhaltene Polymerisatdispersion in einen Nachbehandlungsreaktor überführt wird und darin mittels physikalischer und/oder chemischer Methoden nachbehandelt wird, dadurch gekennzeichnet, dass die im Nachbehandlungsreaktor befindliche Polymerisatdispersion simultan zur Nachbehandlung in einen Kreislauf zur Filtration und Analyse gefördert wird und anschließend in den Nachbehandlungsreaktor zurückgeführt wird.

Geeignete Polymerisationsreaktoren sind dem Fachmann bekannt und sind entsprechend dimensionierte Stahlreaktoren, welche als Druckreaktoren oder Drucklosreaktoren ausgelegt sein können, und mit den üblichen Rühreinrichtungen, Heiz- und Kühlsystemen, Mess- und Regeleinrichtungen, sowie Leitungen zur Zuführung der Edukte bzw. Abführung der Produkte ausgerüstet sind. Geeignete Nachbehandlungsreaktoren sind dem Fachmann bekannt und sind entsprechend dimensionierte Stahlreaktoren, welche im Allgemeinen als Drucklosreaktoren ausgelegt sind, und mit den üblichen Rühreinrichtungen, Heiz- und Kühlsystemen, Mess- und Regeleinrichtungen, sowie Leitungen zur Zuführung und Abführung ausgestattet sind.

Das erfindungsgemäße Verfahren kann im Rahmen einer diskontinuierlichen Polymerisation oder im Rahmen einer kontinuierlichen Polymerisation ausgeführt werden. Bei der diskontinuierlichen Polymerisation wird in einem Polymerisationsreaktor batchweise polymerisiert und in einem Nachbehandlungsreaktor batchweise nachbehandelt. Eine kontinuierliche Polymerisation wird in mindestens zwei hintereinander geschalteten Polymerisationsreaktoren durchgeführt und das damit erhaltene Produkt anschließend kontinuierlich in mindestens einen Nachbehandlungsreaktor überführt und darin nachbehandelt.

Der oder die Nachbehandlungsreaktoren sind jeweils mit einem Kreislauf mit einer oder mehreren Vorrichtungen zur Förderung, Filtration und Analyse der wässrigen Polymerisatdispersion ausgestattet. Der externe Kreislauf zur Filtration und Analyse umfasst eine entsprechend dimensionierte Rohrleitung, in welche mindestens eine Pumpe sowie mindestens eine Filtervorrichtung sowie mindestens eine Analysevorrichtung integriert sind.

Im Allgemeinen befindet sich der Anschluss zur Ausleitung der Polymerisatdispersion in den externen Kreislauf im unteren Drittel des Nachbehandlungsreaktors, bevorzugt am Boden des Reaktors. Der Anschluss zur Rückführung der Polymerisatdispersion aus dem externen Kreislauf in den Nachbehandlungsreaktor befindet sich an einer vom Anschluss zur Ausleitung verschiedenen Stelle, bevorzugt in der oberen Hälfte des Reaktors und besonders bevorzugt in einer tangentialen Einleitung oder an die Wandung des Nachbehandlungsreaktors abgeleitet.

Der verwendete Pumpentyp ist unkritisch. Geeignet sind beispielsweise Freistrompumpem (Vortex) oder Verdrängungspumpen. Bevorzugt werden Verdrängungspumpen, besonders bevorzugt sind Kreiskolbenpumpen oder Schraubenspindelpumpen. Der Stundendurchsatz hängt von der Dimensionierung des Nachbehandlungsreaktors und des Kreislaufes ab. Im Allgemeinen ist der Kreislauf so gestaltet, dass die Durchflußrate (Stundendurchsatz) mindestens das flüssige Volumen im Nachbehandlungsreaktor pro Stunde, bevorzugt mindestens das zweifache dieses Volumens pro Stunde, beträgt. Übliche Werte liegen im Bereich von 1 bis 120 m³/h, bevorzugt 40 bis 100 m³/h bei einem Volumen des Polymerisationsreaktors von 15 bis 60 m³. Bei Reaktoren im Technikumsmaßstab oder Labormaßstab liegen die Stundendurchsätze entsprechend niedriger. Geeignete Filter sind Siebkorbfilter, Beutelfilter, Kantenspaltfilter und andere Filtertypen, die auf Grundlage Größenausschluss filtrieren. Bevorzugte Filter sind automatisch abreinigende Filter, besonders bevorzugt sind automatisch abreinigende Kantenspaltfilter. Verwendete Mesh-Größen sind im Allgemeinen 50 bis 1000 µm. Bevorzugt sind 150 bis 700 µm. Die jeweilige Mesh-Größe ist abhängig von der angestrebten weiteren Verwendung der Polymerisatdispersion.

Die Filtereinheit kann im externen Kreislauf in Fließrichtung vor der Pumpe, zwischen Auslaß des Nachbehandlungsreaktors und der Pumpe angeordnet sein oder in Fließrichtung nach der Pumpe angeordnet sein. Vorzugsweise befindet sich die Filtereinheit im externen Kreislauf in Fließrichtung vor der Pumpe. Besonders bevorzugt befindet sich die Filtereinheit vor möglichen Analysevorrichtungen.

Zur Analyse der Eigenschaften der Polymerisatdispersion werden eine oder mehrere der nachfolgend aufgezählten Vorrichtungen als Analysevorrichtung eingesetzt: Spektrometer für spektroskopische Messverfahren beispielsweise zur Bestimmung der mittleren Partikelgröße mittels Nahinfrarotspektroskopie, Viskosimeter wie Differenzdruck-Rheometer oder Online-Brookfield-Viskosimeter für viskosimetrische Messungen, Messgeräte zur Messung von Redoxpotential und pH-Wert, Dichtemessgeräte, Coriolismasseflussmesser oder radiometrische Messgeräte (gamma-Strahler), Messgeräte zur Bestimmung der Molmasse (Mw), oder Mikrowellensensoren zur Bestimmung des Festgehalts. Vorzugsweise werden in der Analysevorrichtung ein oder mehrere Messgeräte aus der Gruppe umfassend Spektrometer, Viskosimeter, pH-Meter, Coriolismasseflussmesser, radiometrische Messgeräte, Mikrowellensensor und Dichtemessgerät verwendet. Vorzugsweise werden in der Analysevorrichtung ein oder mehrere Produkteigenschaften aus der Gruppe umfassend mittlere Partikelgröße, Molmasse, Festgehalt, Viskosität, VOC-Gehalt (VOC = volatile organic compound), Restmonomergehalt, Redoxpotential und pH-Wert gemessen.

Vorzugsweise werden die Messwerte online an eine Messwarte zur Überwachung und Steuerung der Polymerisationsanlage weitergeleitet. Von dort aus können gegebenenfalls Maßnahmen zur Einstellung der gewünschten Produkteigenschaften eingeleitet werden.

Bei dem Verfahren zur Herstellung einer wäsrigen Polymerisatdispersion mittels Emulsionspolymerisation können beliebige ethylenisch ungesättigte Monomere in wässrigem Medium und in Gegenwart von beliebigen Schutzkolloiden und/oder Emulgatoren und mittels radikalischer Initiierung zur Polymerisation gebracht werden.

Die ethylenisch ungesättigten Monomere werden vorzugsweise ausgewählt aus der Gruppe umfassend Vinylester, (Meth)acrylsäureester, Vinylaromaten, Olefine, 1,3-Diene und Vinylhalogenide und gegebenenfalls weitere damit copolymerisierbare Monomeren.

Geeignete Vinylester sind solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 11 C-Atomen, beispielsweise VeoVa9^{®} oder VeoVa10^{®} (Handelsnamen der Firma Hexion). Besonders bevorzugt ist Vinylacetat.

Geeignete Monomeren aus der Gruppe der Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0 bis 10 Gew.-%, bezogen auf das Gesamtgewicht des Monomergemisches, Hilfsmonomere copolymerisiert werden. Bevorzugt werden 0,1 bis 5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propan-sulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beipielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat.

Besonders bevorzugt werden Monomergemische von Vinylacetat mit 1 bis 50 Gew.-% Ethylen; Monomergemische von Vinylacetat mit 1 bis 50 Gew.-% Ethylen und 1 bis 50 Gew.-% von einem oder mehreren weiteren Comonomeren aus der Gruppe der Vinylester mit 3 bis 12 C-Atomen im Carbonsäurerest wie Vinylpropionat, Vinyllaurat, Vinylester von alpha-verzweigten Carbonsäuren mit 9 bis 11 C-Atomen wie VeoVa9^{®}, VeoVa10^{®}; Monomergemische von einem oder mehreren Vinylestern, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2 Ethylhexylacrylat; Monomergemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Monomergemische mit einem oder mehreren Vinylestern, 1 bis 50 Gew. % Ethylen und 1 bis 60 Gew.-% Vinylchlorid; wobei die genannten Monomergemische jeweils noch die genannten Hilfsmonomere in den genannten Mengen enthalten können, und sich die Angaben in Gew.-% auf jeweils 100 Gew.-% aufaddieren.

Besonders bevorzugt werden auch (Meth)acrylsäureester-Monomergemische, wie Monomergemische von n-Butylacrylat oder 2-Ethylhexylacrylat oder Gemische von Methylmethacrylat mit n-Butylacrylat und/oder 2-Ethylhexylacrylat; Styrol-Acrylsäureester-Monomergemische mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Monomergemische mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Monomergemische ; wobei die genannten Monomergemische noch Hilfsmonomere in den genannten Mengen enthalten können, und sich die Angaben in Gew.-% auf jeweils 100 Gew.-% aufaddieren.

Beispiele für besonders bevorzugte Comonomere für Vinylchlorid-Monomergemische sind α-Olefine wie Ethylen und Propylen, Vinylester wie Vinylacetat, Acrylsäureester und Methacrylsäureester von Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat, Fumar- und Maleinsäuremono- oder -diester wie die Dimethyl- und Diethylester der Maleinsäure und Fumarsäure.

Am meisten bevorzugt werden Monomergemische mit Vinylacetat und 5 bis 50 Gew.-% Ethylen; Monomergemische mit Vinylacetat und 1 bis 50 Gew.-% Ethylen und 1 bis 50 Gew.-% von einem Vinylester von α-verzweigten Monocarbonsäuren mit 9 bis 11 C-Atomen; Monomergemische mit 30 bis 75 Gew.-% Vinylacetat, 1 bis 30 Gew.-% Vinyllaurat oder einem Vinylester einer α-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche gegebenenfalls noch 1 bis 40 Gew.-% Ethylen enthalten; Monomergemische mit Vinylacetat, 5 bis 50 Gew.-% Ethylen und 1 bis 60 Gew.-% Vinylchlorid; sowie Monomergemische enthaltend 60 bis 98 Gew.-% Vinylchlorid und 1 bis 40 Gew.-% Ethylen, wobei die Monomergemische jeweils noch Hilfsmonomere in den genannten Mengen enthalten können, und sich die Angaben in Gew.-% auf jeweils 100 Gew.-% aufaddieren.

Die Monomerauswahl und die Auswahl der Gewichtsanteile der Comonomere erfolgt dabei so, dass im Allgemeinen eine Glasübergangstemperatur Tg von -50°C bis +50°C, bevorzugt von -20°C bis +30°C, resultiert. Die. Glasübergangstemperatur Tg der Polymerisate kann in bekannter Weise mittels DSC (Dynamische Differenz-Thermoanalyse, DIN EN ISO 11357-1/2), beispielsweise mit dem dynamischen Differenzkalorimeter DSC1 der Firma Mettler-Toledo im offenen Tiegel bei einer Heizrate von 10 K/min bestimmt werden. Als Glasübergangstemperatur wird im Wärmeflussdiagramm die Temperatur am Mittelpunkt der Stufe (Mittelpunkt = halbe Stufenhöhe der Stufe des Wärmeflusses) der zweiten Aufheizkurve ausgewertet. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht und Tgn die Glasübergangstemperatur in Kelvin des Homopolymeren des Monomeren n ist. Tg-Werte für Homopolymerisate sind in Polymer Handbook 2nd Edition, JU. Wiley & Sons, New York (1975) aufgeführt.

Die Polymerisation erfolgt unter den für eine Emulsionspolymerisation typischen Bedingungen. Die Polymerisationstemperatur liegt vorzugsweise zwischen 50°C und 110°C. Der Druck hängt davon ab, ob die zu polymerisierenden Monomere bei der jeweiligen Polymerisationstemperatur flüssig oder gasförmig vorliegen und beträgt vorzugsweise 1 bis 110 barabs.. Bei der Copolymerisation von gasförmigen Comonomeren wie Ethylen, 1,3-Butadien oder Vinylchlorid wird unter Druck, und besonders bevorzugt bei 10 bis 80 barabs., polymerisiert.

Die Initiierung der Polymerisation erfolgt mit den für die Emulsionspolymerisation gebräuchlichen Redox-Initiator-Kombinationen aus Oxidationsinitiator und Reduktionsinitiator. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Bevorzugt werden die Natrium-, Kalium- und Ammoniumsalze der Peroxodischwefelsäure und Wasserstoffperoxid. Die genannten Initiatoren werden im allgemeinen in einer Menge von 0,01 bis 2.0 Gew.-%, bezogen auf das Gesamtgewicht der Monomere, eingesetzt.

Geeignete Reduktionsinitiatoren sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und Ascorbinsäure, Isoascorbinsäure oder deren Salze; oder formaldehydfreie Reduktionsmittel wie 2-Hydroxy-2-sulfinato-essigsäure-di-Natriumsalz (Brüggolith FF6). Die Reduktionsmittelmenge beträgt vorzugsweise 0,015 bis 3 Gew.-%, bezogen auf das Gesamtgewicht der Monomere.

Die genannten Oxidationsmittel, insbesondere die Salze der Peroxodischwefelsäure, können auch alleinig als thermische Initiatoren eingesetzt werden.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Geeignete Schutzkolloide sind vollverseifte oder teilverseifte Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugte Schutzkolloide sind teilverseifte oder vollverseifte Polyvinylalkohole. Bevorzugt sind teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden.

Weitere bevorzugte Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0,1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich.

Die Schutzkolloide werden im allgemeinen in einer Menge von insgesamt 1 bis 20 Gew.-%, bezogen auf das Gesamtgewicht der Monomere, bei der Polymerisation zugesetzt.

Gegebenenfalls können Emulgatoren, beispielsweise anionische und/oder nichtionische Emulgatoren, bei der Polymerisation verwendet werden, beispielsweise 0,1 bis 2,0 Gew.-%, bezogen auf das Gesamtgewicht der Comonomeren. Beispiele für anionische Emulgatoren sind Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylenoxid- oder Propylenoxideinheiten, Alkyl- oder Alkylarylsulfonate mit 8 bis 18 C-Atomen, Ester und Halbester der Sulfobernsteinsäure mit einwertigen Alkoholen. Beispiele für nichtionische Emulgatoren sind C₁₂-C₁₄-Fettalkoholethoxylate mit einem Ethoxylierungsgrad von 2 bis 20 Ethylenoxid-Einheiten.

Die mit dem erfindungsgemäßen Verfahren erhältlichen wässrigen Dispersionen haben einen Feststoffgehalt von 30 bis 75 Gew.-%, vorzugsweise von 50 bis 60 Gew.-%.

Die Polymerisation wird im Allgemeinen bis zu einem Umsatz von > 95 Gew.-%, vorzugsweise bis zu einem Umsatz von 95 bis 99 Gew.-%, der unter Polymerisationsbedingungen flüssigen Monomere geführt.

Anschließend wird in einer ersten Phase der Nachbehandlung das Polymerisationsgemisch auf einen Druck von 0,1 bis 5,0 bar abs., vorzugsweise 0,1 bis 1,0 bar abs., entspannt. Im Allgemeinen wird dazu das Polymerisationsgemisch aus dem Polymerisationsreaktor in einen unter entsprechendem Druck stehenden Nachbehandlungsreaktor (Entspannungsbehälter) überführt. Bei diskontinuierlichem Betrieb (Batch- oder Semibatch-Fahrweise) erfolgt die Entspannung nach abgeschlossener Polymerisation. Bei kontinuierlicher Polymerisation wird das Polymerisationsgemisch kontinuierlich in den Nachbehandlungsreaktor überführt.

Der Transport erfolgt aufgrund der Druckdifferenz zwischen Polymerisationsreaktor und Nachbehandlungsreaktor. Die Druckdifferenz beträgt vorzugsweise von 0,5 bis 5 bar. Wenn während der Reaktorentleerung die Druckdifferenz soweit abnimmt, dass die Entleerungsgeschwindigkeit die Grenze der Wirtschaftlichkeit des Prozesses unterschreitet, kann durch Einleiten von Inertgas, beispielsweise Nachdrücken mit Stickstoff, der Vordruck im Polymerisationsreaktor konstant gehalten oder erhöht werden. Die Zeitdauer für diese erste Phase der Nachbehandlung, die Entspannung, beträgt im Allgemeinen 0,5 bis 1 Stunde.

Während der Entspannung des Polymerisationsansatzes kommt es zur Phasentrennung zwischen der Polymerdispersion (flüssige Phase) und einer gasförmigen Phase, welche Inertgas und bei der Polymerisation nicht vollständig umgesetzte Monomere sowie gegebenenfalls Nebenprodukte aus der Polymerisation enthält. Die bei der Entspannung anfallende gasförmige Phase kann in einer zweiten Phase der Nachbehandlung, der Entgasung, abgezogen und gegebenenfalls der Monomerrückgewinnung zugeführt oder der Verbrennung zugeführt. Die Zeitdauer für diese zweite Phase der Nachbehandlung, die Entspannung, beträgt im Allgemeinen 15 Minuten bis 1 Stunde.

In einer dritten Phase der Nachbehandlung kann in Anwendung bekannter Methoden nachpolymerisiert werden, beispielsweise durch mit Redoxkatalysator initiierter Nachpolymerisation. Zur Nachpolymerisation werden Redoxinitiatorsysteme beispielsweise mit den obengenannten Oxidationsinitiatoren und Reduktionsinitiatoren eingesetzt. Im Allgemeinen wird für die Nachpolymerisation ein Initiatorsystem eingesetzt, welches von dem für die Hauptpolymerisation verwendeten verschieden ist. Zur Nachpolymerisation bevorzugt werden Redoxkombinationen von Wasserstoffperoxid, Natriumperoxid, Kaliumperoxid oder t-Butylhydroperoxid mit Natriumsulfit, Alkaliformaldehydsulfoxylaten oder Ascorbinsäure. Die Nachpolymerisation wird im Allgemeinen bei Temperaturen von 30°C bis 60°C und über einen Zeitraum von 0,5 bis 1 Stunde durchgeführt. Die Komponenten des Redoxsystems können stoßweise zugegeben werden oder kontinuierlich zudosiert werden. Die Menge an Oxidationsinitiator und Reduktionsinitiator beträgt im Allgemeinen jeweils 0,01 bis 0,4 Gew.-%, bezogen auf Restmonomer.

In einer vierten Phase der Nachbehandlung können flüchtige Komponenten mittels Strippen entfernt werden, das heißt mittels Überleiten oder vorzugsweise Durchleiten von inerten Schleppgasen wie Luft, Stickstoff oder Wasserdampf. Im Allgemeinen wird das Strippen bei 50°C bis 80°C und unter einem Vakkuum von 0,1 bis 0,5 bar abs. und während ein bis zwei Stunden durchgeführt. Bei der Nachbehandlung mit Wasserdampf wird vorzugsweise so vorgegangen, dass nicht mehr als 5 bis 10 Gew.-% Kondensat, bezogen auf Polymerisatdispersion, eingetragen werden.

Gegebenenfalls kann in einer fünften Phase die Polymerisatdispersion abgekühlt werden, beispielsweise vor deren Konfektionierung mit temperaturempfindlichen Zusatzstoffen wie Bioziden. Vorzugsweise wird auf eine Temperatur von 20°C bis 40°C abgekühlt. Die Zeitdauer für die Abkühlung beträgt im Allgemeinen 1 bis 2 Stunden.

Nach Abschluss der Nachbehandlung wird die Polymerisatdispersion in einen Lagerbehälter überführt.

Bei der Überführung der Polymerisatdispersion in den Nachbehandlungsreaktor, während der ersten Phase der Nachbehandlung, bildet sich am Boden des Nachbehandlungsreaktors eine flüssige Phase. Vorzugsweise nach Bildung dieser flüssigen Phase, besonders bevorzugt 10 bis 60 Minuten nach Beginn der Entspannung, wird die Pumpe im externen Kreislauf angeschaltet und die Polymerisatdispersion aus dem Nachbehandlungsreaktor in den externen Kreislauf transportiert. Die Polymerisatdispersion wird in den Filtereinbauten im externen Kreislauf von Koagulat befreit. In der nachgeschalteten Analysevorrichtung des externen Kreislaufs wird die Polymerisatdispersion analysiert. Im Allgemeinen werden Festgehalt, Viskosität, VOC-Gehalt, Restmonomergehalt, Partikelgröße, Molmassen (Mw), pH-Wert und Redoxpotential analysiert. Vorzugsweise werden mindestens Festgehalt und Viskosität analysiert.

Die Filtration und Analyse der Polymerisatdispersion kann in einzelnen Phasen der Nachbehandlung erfolgen oder jeweils in jeder Phase der Nachbehandlung der Polymerisatdispersion. Vorzugsweise wird während der Nachbehandlung der Polymerisatdispersion kontinuierlich Polymerisatdispersion aus dem Nachbehandlungsreaktor in den externen Kreislauf zur Filtration und Analyse gefördert und anschließend wieder in den Nachbehandlungsreaktor zurückgeführt.

Die wässrigen Polymerisatdispersionen können zur Herstellung von in Wasser redispergierbaren Polymerpulvern verwendet werden. Dazu werden die wässrigen Polymerisatdispersionen, gegebenenfalls nach Zusatz von Schutzkolloiden als Verdüsungshilfe, mittels Wirbelschichttrocknung, Gefriertrocknung oder vorzugsweise Sprühtrocknung getrocknet.

Die wässrigen Polymerisatdispersionen und die in Wasser redispergierbaren Polymerpulver können in den dafür typischen Anwendungsbereichen eingesetzt werden. Beispielsweise in bauchemischen Produkten, gegebenenfalls in Verbindung mit hydraulisch abbindenden Bindemitteln wie Zementen, Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Ferner als Bindemittel für Beschichtungsmittel und Klebemittel oder als Beschichtungs- oder Bindemittel für Textilien und Papier.

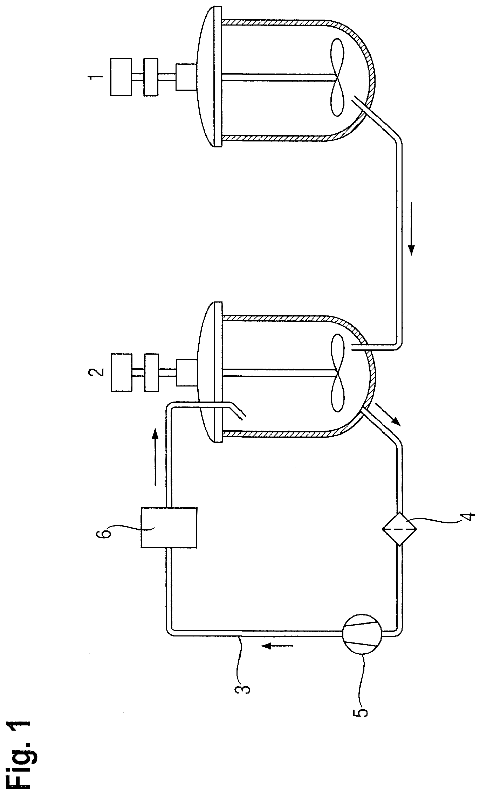

Die nachfolgenden Beispiele und Figur 1 dienen der weiteren Erläuterung der Erfindung:
Figur 1 zeigt ein vereinfachtes Schema für eine Vorrichtung zur Durchführung des Verfahrens mit einem Polymerisationsreaktor 1, einem Nachbehandlungsreaktor 2 und einem Kreislauf 3, welcher mit einer Filtervorrichtung 4, einer Pumpe 5 und einer Analysevorrichtung 6 ausgestattet ist.

### Vergleichsbeispiel 1:

In einem Druckreaktor mit einem Volumen von ca. 600 Liter wurden folgende Komponenten vorgelegt:
115 kg Wasser,
105 kg einer 20 Gew.-%igen Polyvinylalkohollösung eines teilverseiften Polyvinylalkohols mit einem Hydrolysegrad von 88 Mol-% und einer Höpplerviskosität von 4 mPas (Methode nach Höppler gemäß DIN 53015 bei 20°C und in 4 %-iger wässriger Lösung),
11 kg einer 10 Gew.-%igen Polyvinylalkohollösung eines teilverseiften Polyvinylalkohols mit einem Hydrolysegrad von 88 Mol-% und einer Höpplerviskosität von 25 mPas,
70 g einer 85 %-igen wässrigen Lösung von Ameisensäure,
80 g einer 10 %-igen wässrigen Eisenammoniumsulfatlösung.

Der Reaktor wurde evakuiert, dann wurden zur wässrigen Vorlage 220 kg Vinylacetat gegeben. Anschließend wurde der Reaktor auf 55°C aufgeheizt und mit einem Ethylendruck von 32 bar beaufschlagt (entsprechend einer Menge von 28 kg Ethylen).

Die Polymerisation wurde durch Zugabe von 3 Gew.%-iger wässriger Kaliumpersulfatlösung mit einer Rate von 1,5 kg/h und Zugabe von 1,5 Gew.%-iger wässriger Natriumhydroxymethansulfinat-Lösung (Brüggolit) mit einer Rate von 1,5 kg/h gestartet. Nach Beobachten des Polymerisationsbeginnes wurde die Innentemperatur innerhalb 30 min auf 85°C erhöht. Der Druck wurde ab Reaktionsbeginn auf 55 bar erhöht und gehalten bis weitere 10 kg Ethylen dosiert waren. Anschließend wurde das Ethylenventil geschlossen und der Druck fallen gelassen. Ab Erreichen der 75°C Polymerisationstemperatur wurden weitere 55 kg Vinylacetat innerhalb 2 Stunden zudosiert und die Initatorraten auf eine Rate von 2,0 kg/h bis 2,5 kg/h gesteigert. Nach dem Dosierende von Vinylacetat liefen die Initiatoren noch weitere 60 Minuten um den Ansatz auszupolymerisieren.

Die Gesamtpolymerisationszeit betrug ca. 5 Stunden.

Die Polymerisatdispersion hatte eine Temperatur von 80°C und wurde anschließend aus dem Polymerisationsreaktor mit einem Druck von 55 bar abs. in einen Nachbehandlungsreaktor (Volumen ca. 2000 Liter) auf einen Druck von 0,8 bar abs. entspannt. Nach 30 Minuten wurde durch Anlegen eines Drucks von 0,5 bar abs. über einen Zeitraum von 30 Minuten entgast. Nach Abschluss der Entgasung wurden 500 g einer 10 Gew.%-igen wässrigen Lösung von tertiär-Butylhydroperoxid und 145 g einer 10 Gew.%-igen wässrigen Lösung von Brüggolit zugegeben und über einen Zeitraum von 2 Stunden nachpolymerisiert. Nach Abschluss der Nachpolymerisation wurde die Polymerisatdispersion mittels Durchleiten von 60 kg/h Wasserdampf (6 bar abs, 158°C) 1 Stunde lang gestrippt. Danach wurde noch 1,5 Stunden gekühlt bis die Temperatur der Polymerisatdispersion eine Temperatur von 38°C hatte.

Nach Beendigung der Nachbehandlungsschritte wurde eine Probe von 0,5 Liter aus dem Nachbehandlungsreaktor entnommen und im Labor mit üblichen Methoden der Festgehalt, die Viskosität, der pH-Wert, das Redox-Potential und der Gehalt an Restmonomer analysiert. Die Wartezeit bis zum Vorliegen der Analyseergebnisse betrug ca. 1,5 Stunden.

Nach Prüfung aller Analyseergebnisse wurde die Polymerisatdispersion während der Verpumpung aus dem Nachbehandlungsreaktor mittels einem handelsüblichen Beutelfilter aus Nylongewebe mit einer Mesh-Größe von 500 µm filtriert. Aufgrund der Filtration war der Stundendurchsatz auf 0,4 m³/h beschränkt.

Die gesamte Zykluszeit der Nachbehandlung im Nachbehandlungsreaktor summiert sich im Vergleichsbeispiel 1 auf 7 Stunden.

### Beispiel 2:

Es wurde analog Vergleichsbeispiel 1 in dem Polymerisationsreaktor 1 mit einem Volumen von ca. 600 Liter polymerisiert. Die Gesamtpolymerisationszeit betrug ca. 5 Stunden.

Die Polymerisatdispersion hatte eine Temperatur von 80°C und wurde anschließend aus dem Polymerisationsreaktor 1 mit einem Druck von 55 bar abs. in den Nachbehandlungsreaktor 2 auf einen Druck von 0,8 bar abs. entspannt.

Der Nachbehandlungsreaktor 2 war wie in Figur 1 dargestellt mit einem externen Kreislauf 3 ausgestattet, einer Rohrleitung, welche am Boden des Nachbehandlungsraktor 2 austritt und im Kreis zum Nachbehandlungsreaktor 2 zurückführt. In diesem externen Kreislauf 3 waren ein Filter 4 (Beutelfilter aus Nylongewebe mit 500 µm Mesh-Größe), eine Pumpe 5 (Exzenterschneckenpumpe) und eine Analyseeinheit 6 (Festgehaltbestimmung über Dichtemessung mit Coriolis mit Endress+Hauser Proline 83i, Viskositätsmessung über Torsionsschwingung mit Marimex VA-300 L-LT, pH-Wert und Redox-Potential über handelsübliche Glassonden von Knick, sowie Gehalt an Restmonomer über NIR mit IRcube FT-IR von Bruker) installiert. Die analysierten Werte wurden über das Prozessleitsystem online verfolgt.

15 Minuten nach Beginn der Entspannung hatte sich am Boden des Nachbehandlungsreaktors 2 eine flüssige Phase gebildet und es wurde die Pumpe 4 angeschaltet und die Polymerisatdispersion mit 1,2 m³/h durch den Kreislauf 3 gepumpt.

30 Minuten nach Beginn der Entspannung wurde durch Anlegen eines Drucks von 0,5 bar abs. über einen Zeitraum von 30 Minuten entgast. Nach Abschluss der Entgasung wurden 500 g einer 10 Gew.%-igen wässrigen Lösung von tertiär-Butylhydroperoxid und 145 g einer 10 Gew.%-i-gen wässrigen Lösung von Brüggolit zugegeben und über einen Zeitraum von 2 Stunden nachpolymerisiert. Nach Abschluss der Nachpolymerisation wurde die Polymerisatdispersion mittels Durchleiten von 60 kg/h Wasserdampf (6 bar abs., 158°C) 1 Stunde lang gestrippt. Danach wurde noch 1,5 Stunden gekühlt bis die Temperatur der Polymerisatdispersion eine Temperatur von 38°C hatte.

Nach Abschluss der Kühlung wurde die Pumpe 4 ausgeschaltet.

Die Polymerisatdispersion war frei von Koagulat und wurde mit 1200 g Biozid abgemischt und mit einem Stundendurchsatz von 1,2 m³/h in den Lagerbehälter abgepumpt.

Die gesamte Zykluszeit der Nachbehandlung in Beispiel 2 betrug 5,5 Stunden.

Der Vergleich von Beispiel 2 (5,5 h) mit Vergleichsbeispiel 1 (7,0 h) zeigt, dass mit dem erfindungsgemäßen Verfahren die Zeit für die Herstellung einer Polymerisatdispersion deutlich verkürzt wird. Der Stundendurchsatz beim Abpumpen der Polymerisatdispersion in den Lagerbehälter wird wegen der kontinuierlichen Filtration während der Nachbehandlung in Beispiel 2 (1,2 m³/h) deutlich erhöht gegenüber Vergleichsbeispiel 1 (0,4 m³/h).

Die Vorteile des erfindungsgemäßen Verfahrens bestehen darin, dass die Nachbearbeitung, Filtration und Analyse der Polymerisatdispersion nicht mehr sequentiell ausgeführt werden, sondern parallel bzw. simultan stattfinden. Dies bedingt eine signifikante Verkürzung der Zykluszeiten für die Herstellung der Polymerisatdispersion.

Bei der Verwendung von online-Analyse-Vorrichtungen wird die Analyse der Polymerisatdispersion beschleunigt und die Gefahr der Exposition von VOC für das Bedienpersonal drastisch reduziert.

Überraschenderweise lassen sich mit dem erfindungsgemäßen Verfahren auch weiche Gelpartikel, wie die von VAE-Dispersionen, mittels Filtration abtrennen.

## Patentansprüche

1. Verfahren zur Herstellung einer wässrigen Polymerisatdispersion mittels radikalisch initiierter Emulsionspolymerisation von radikalisch polymerisierbaren ethylenisch ungesättigten Monomeren in einem Polymerisationsreaktor, wobei die damit erhaltene Polymerisatdispersion in einen Nachbehandlungsreaktor überführt wird und darin mittels physikalischer und/oder chemischer Methoden nachbehandelt wird, **dadurch gekennzeichnet, dass** die im Nachbehandlungsreaktor befindliche Polymerisatdispersion simultan zur Nachbehandlung in einen Kreislauf zur Filtration und Analyse gefördert wird und anschließend in den Nachbehandlungsreaktor zurückgeführt wird.

2. Verfahren nach Anspruch 1, **dadurch gekennzeichnet, dass** der Kreislauf so gestaltet ist, dass die Durchflußrate pro Stunde mindestens dem flüssige Volumen im Nachbehandlungsreaktor entspricht.

3. Verfahren nach Anspruch 1 oder 2, **dadurch gekennzeichnet, dass** die Filtration mittels automatisch abreinigenden Filtern mit Meshgrößen von 50 bis 1000 µm erfolgt.

4. Verfahren nach Anspruch 1 bis 3, **dadurch gekennzeichnet, dass** zur Analyse in einer Analysevorrichtung ein oder mehrere Produkteigenschaften aus der Gruppe umfassend mittlere Partikelgröße, Molmasse, Festgehalt, Viskosität, VOC-Gehalt, Restmonomergehalt, Redoxpotential und pH-Wert gemessen werden.

5. Verfahren nach Anspruch 1 bis 4, **dadurch gekennzeichnet, dass** zur Nachbehandlung in einer ersten Phase das Polymerisationsgemisch auf einen Druck von 0,1 bis 5,0 bar abs. entspannt wird, in einer zweiten Phase die bei der Entspannung anfallende gasförmige Phase abgezogen wird, gegebenenfalls in einer dritten Phase nachpolymerisiert wird, anschließend gegebenenfalls in einer vierten Phase flüchtige Komponenten mittels Überleiten oder Durchleiten von inerten Schleppgasen entfernt werden, und gegebenenfalls in einer fünften Phase die Polymerisatdispersion abgekühlt wird.

6. Verfahren nach Anspruch 1 bis 5, **dadurch gekennzeichnet, dass** die Filtration und Analyse der Polymerisatdispersion in einzelnen Phasen der Nachbehandlung erfolgt oder in jeder Phase der Nachbehandlung erfolgt.

7. Verfahren nach Anspruch 1 bis 6, **dadurch gekennzeichnet, dass** während der Nachbehandlung der Polymerisatdispersion kontinuierlich Polymerisatdispersion aus dem Nachbehandlungsreaktor in den externen Kreislauf zur Filtration und Analyse gefördert wird und anschließend wieder in den Nachbehandlungsreaktor zurückgeführt wird.

## Claims

1. Process for producing an aqueous polymer dispersion by means of free-radically initiated emulsion polymerization of radically polymerizable ethylenically unsaturated monomers in a polymerization reactor, wherein the polymer dispersion thus obtained is transferred to a post-treatment reactor and is post-treated therein by physical and/or chemical methods, **characterized in that** the polymer dispersion in the post-treatment reactor is conveyed, simultaneously to the post-treatment, to a circuit for filtration and analysis and is then fed back to the post-treatment reactor.

2. Process according to Claim 1, **characterized in that** the circuit is configured such that the flow rate per hour corresponds to at least the liquid volume in the post-treatment reactor.

3. Process according to Claim 1 or 2, **characterized in that** the filtration is effected by automatically cleaning filters having mesh sizes of 50 to 1000 µm.

4. Process according to Claims 1 to 3, **characterized in that**, for the analysis, one or more product properties from the group comprising mean particle size, molar mass, solids content, viscosity, VOC content, residual monomer content, redox potential and pH are measured in an analytical device.

5. Process according to Claims 1 to 4, **characterized in that** in a first phase of the post-treatment the polymerization mixture is depressurized to a pressure from 0.1 to 5.0 bar absolute, in a second phase the gaseous phase resulting from the depressurization is withdrawn, optionally post-polymerized in a third phase, then optionally in a fourth phase volatile components are removed by passing over or passing through inert entrainment gases, and optionally in a fifth phase the polymer dispersion is cooled.

6. Process according to Claims 1 to 5, **characterized in that** the filtration and analysis of the polymer dispersion is carried out in single phases of the post-treatment or in every phase of the post-treatment.

7. Process according to Claims 1 to 6, **characterized in that** during the post-treatment of the polymer dispersion, polymer dispersion is conveyed continuously from the post-treatment reactor to the external circuit for filtration and analysis and is then fed back again to the post-treatment reactor.

## Revendications

1. Procédé de fabrication d'une dispersion aqueuse de polymères par une polymérisation radicalaire en émulsion de monomères à insaturation éthylénique polymérisables par polymérisation radicalaire dans un réacteur de polymérisation, la dispersion de polymères ainsi obtenue étant transférée dans un réacteur de post-traitement et y subissant un post-traitement par des procédés physiques et/ou chimiques, **caractérisé en ce que** la dispersion de polymères se trouvant dans le réacteur de post-traitement est simultanément refoulée pour post-traitement dans un circuit de filtration et d'analyse, puis est renvoyée dans le réacteur de post-traitement.

2. Procédé selon la revendication 1, **caractérisé en ce que** le circuit est conçu de telle sorte que le débit par heure corresponde au moins au volume liquide dans le réacteur de post-traitement.

3. Procédé selon la revendication 1 ou 2, **caractérisé en ce que** la filtration a lieu à l'aide de filtres autonettoyants présentant une ouverture de maille de 50 à 1 000 µm.

4. Procédé selon les revendications 1 à 3, **caractérisé en ce que**, pour l'analyse, on mesure dans un dispositif d'analyse une ou plusieurs propriétés du produit, choisies dans le groupe comprenant la granulométrie moyenne, la masse moléculaire, la teneur en extrait sec, la viscosité, la teneur en COV, la teneur en monomères résiduels, le potentiel rédox et le pH.

5. Procédé selon les revendications 1 à 4, **caractérisé en ce que**, pour le post-traitement, dans une première phase on détend le mélange de polymérisation jusqu'à une pression de 0,1 à 5,0 bar abs, dans une deuxième phase on soutire la phase gazeuse obtenue lors de la détente, éventuellement dans une troisième phase on procède à une post-polymérisation, puis éventuellement dans une quatrième phase on élimine les composants liquides par envoi, par-dessus ou au travers, de gaz d'entraînement inertes, et éventuellement dans une cinquième phase on refroidit la dispersion de polymères.

6. Procédé selon les revendications 1 à 5, **caractérisé en ce que** la filtration et l'analyse de la dispersion de polymères ont lieu dans des phases individuelles du post-traitement, ou ont lieu dans chaque phase du post-traitement.

7. Procédé selon les revendications 1 à 6, **caractérisé en ce que**, pendant le post-traitement de la dispersion de polymères, on refoule en continu la dispersion de polymères, à partir du réacteur de post-traitement, dans le circuit externe pour filtration et analyse, puis on la renvoie dans le réacteur de post-traitement.
